# FASCICULE DE BREVET EUROPEEN

(11) **EP 0 981 496 B1**
(45) Date de publication et mention de la délivrance du brevet: **18.12.2002**
(21) Numéro de dépôt: 98925712.6
(22) Date de dépôt: 14.05.1998
(51) Int. Cl.: C01B 13/32, C01B 33/158, C01G 23/053

(54) **PROCEDE DE FABRICATION D'OXYDES METALLIQUES, SIMPLES OU MIXTES, OU D'OXYDE DE SILICIUM**
VERFAHREN ZUR HERSTELLUNG VON EINFACHEN ODER GEMISCHTEN METALLOXIDEN ODER VON SILICIUMOXID
METHOD FOR MAKING SINGLE OR MIXED METAL OXIDES OR SILICON OXIDE

(30) Priorité: 15.05.1997 FR 9705994
(43) Date de publication de la demande: 01.03.2000
(73) Titulaire: COMMISSARIAT A L'ENERGIE ATOMIQUE, 75752 Paris Cédex 15 (FR)
(72) Inventeur: SARRADE, Stéphane Résidence des Arènes, F-84100 Orange (FR); SCHRIVE, Luc, F-30130 Pont-Saint-Esprit (FR); GUIZARD, Christian "Les Jardins du Séminaire", F-34080 Montpellier (FR); JULBE, Anne, F-34000 Montpellier (FR)
(74) Mandataire: Des Termes, Monique
(86) Numéro de dépôt international: FR9800963
(87) Numéro de publication internationale: WO98051613

(56) Documents cités:
- EP-A- 0 225 785
- WO-A-85/00993
- WO-A-94/01361
- PATENT ABSTRACTS OF JAPAN vol. 014, no. 133 (E-0902), 13 mars 1990 & JP 02 001122 A (MATSUSHITA ELECTRIC IND CO LTD), 5 janvier 1990

## Description

### Domaine technique de l'invention

La présente invention se rapporte à un procédé de fabrication d'un produit à base d'oxyde métallique simple ou mixte, où d'un oxyde de silicium, à partir d'un ou de plusieurs précurseur(s) organique(s), en utilisant du CO₂ supercritique en tant que milieu réactionnel.

Ces oxydes métalliques peuvent être, par exemple, des oxydes de titane, d'aluminium, de magnésium, de thorium, de baryum, de beryllium, de zirconium, etc.

Ce procédé, suivant les conditions opératoires, conduit à l'obtention de produits sous forme de liquides, de gels, de poudres, de fibres, etc.

Un des objectifs de l'invention est la formation d'une poudre, dont la taille et la géométrie des particules qui la composent, est contrôlable en fonction des conditions opératoires utilisées pour sa fabrication, et du mode de séparation du produit obtenu. En outre, le procédé de l'invention permet la fabrication d'une poudre composée de particules nanométriques.

Ces poudres trouvent, par exemple, une application dans la fabrication des matériaux céramiques, cette fabrication faisant appel à des matières premières élaborées.

En effet, en dopant une céramique de Si₃N₄ par 5 % de SiC, sous forme de particules nanométriques, on obtient une céramique nanocomposite cinq fois plus résistante à la propagation des fissures que la céramique Si₃N₄ initiale. Les nanoparticules servent ici d'amortisseurs en absorbant les tensions mécaniques appliquées et en permettant le glissement des plans atomiques.

De plus, en utilisant une céramique nanocomposite formée uniquement de particules nanométriques, on obtient un nanocomposite avec des propriétés de ténacité, ductilité, comparables à l'acier. Les applications pressenties sont, par exemple, dans les industries automobiles, par exemple pour les moteurs, les turbines, etc. et spatiales, par exemple, le revêtement réfractaire des navettes spatiales.

Du point de vue de la recherche médicale, les céramiques nanocomposites sont étudiées pour réaliser des prothèses, par exemple, de hanches, de vertèbres, mécaniquement résistantes et compatibles avec l'organisme humain, ce qui n'est pas le cas de l'acier.

De plus, dans la fabrication de ces matériaux céramiques, une structure amorphe de la poudre initiale permet dans certains cas un frittage à plus basse température.

Un autre exemple d'utilisation de ces poudres composées est le dopage de matériaux ferromagnétiques. En effet, dopés par des nanoparticules, les matériaux ferromagnétiques peuvent acquérir une forte aimantation sous un champ d'excitation très faible. Ce phénomène, connu sous le nom de "superparamagnétisme", a une application directe pour l'amélioration des têtes de lecture de bandes et de disques magnétiques.

Le procédé de fabrication selon l'invention permet également de fabriquer des poudres d'oxyde(s) métallique(s) qui pourraient trouver une application en optique, par exemple, en tant que revêtements de surface pour augmenter le pouvoir d'absorption dans les spectres visibles, tout en réduisant les pertes par rayonnement infrarouge.

De nombreux autres exemples d'utilisation de ces poudres à base d'oxyde(s) peuvent être cités, tels que la fabrication de solides microporeux utilisés comme catalyseurs, la fabrication de phases stationnaires utilisées pour les chromotographies en phase solide, la fabrication de membranes sélectives pour la nanofiltration, la séparation de gaz, etc.

### Art antérieur

La production d'une poudre d'oxyde(s) peut être obtenue à partir de quatre voies de fabrication, les voies solides, liquides, gazeuses et supercritiques.

Les voies solides nécessitent très souvent d'appliquer une étape mécanique, par exemple, de broyage, d'abrasion, etc. pour obtenir une granulométrie de poudre désirée. Ces procédés, économiquement rentables, ne permettent pas de contrôler précisément la taille des particules finales et d'élaborer en particulier des poudres submicroniques.

Le problème majeur de la production de poudres par voie liquide est l'agglomération des particules. En effet, l'élimination du solvant, siège des réactions, entraîne, en général, l'agglomération partielle des particules, les rendant parfois difficilement compatibles avec un usage industriel.

Le procédé sol-gel permet également la fabrication d'une poudre fine d'oxyde(s) métallique(s). Ce procédé consiste en la préparation d'une suspension stable d'espèces condensées, dans un liquide, à partir de précurseurs (sels minéraux ou composés organo-organiques). Cette suspension constitue un sol. La formation, dans le sol, d'un réseau amorphe tridimensionnel, à partir de ces espèces condensées, emprisonnant une fraction du liquide, conduit à la formation d'un gel. La poudre est obtenue par élimination totale du liquide de ce gel.

Les précurseurs utilisés dans la voie sol-gel pour la préparation de poudres d'oxydes sont des précurseurs métallo-organiques, tels que les alkoxydes ou des précurseurs minéraux tels que les sels ou les hydroxydes métalliques.

Lorsque les précurseurs sont des alcoxydes; leur activité peut être modifiée notamment à l'aide d'agents complexants tels que l'acétylacétone qui bloque les fonctions alcoxy. On obtient ainsi des alcoxydes modifiés.

Les voies gazeuses ne permettent pas d'obtenir des poudres d'oxydes amorphes, du fait des températures élevées généralement utilisées.

Les voies supercritiques, quant à elles, sont utilisées dans différentes techniques de préparation de poudres, par exemple, la technique de synthèse hydrothermale, le séchage supercritique, et les réactions en milieu supercritique.

La synthèse hydrothermale est réalisée dans des conditions supercritiques, c'est-à-dire à une pression supérieure à 2,2 x 10⁷ Pa, et à une température supérieure à 374°C. L'eau est utilisée pour l'élaboration de gros cristaux par croissance cristalline lente.

Le séchage supercritique consiste en l'élimination d'un solvant en contournant son point critique, c'est-à-dire en passant de manière continue de l'état liquide à celui gazeux.

En ce qui concerne les réactions en milieu supercritique, le document The journal of Supercritical Fluids 4, p.55,1991, décrit une étude de la solubilité et de la résistance thermique de composés organométalliques dans le CO₂ supercritique à 150 et 170°C pour une gamme de pression comprise entre 1,2 x 10⁷ et 2,2 x 10⁷ Pa.

Le document Journal of Material Science 27, 1992, 2 187-2 192, décrit la synthèse de poudres submicroniques MgAl₂O₄ en milieu éthanol supercritique à partir de l'alkoxyde double Mg[Al(O-SecBU)₄]₂. Cette synthèse est réalisée à environ 360°C.

Le document Materials Chemistry and Physics 32, 1992, pages 249 à 254, décrit la synthèse de poudres d'oxydes de titane submicronique, en phases vapeur, liquide et supercritique. La synthèse de l'oxyde de titane en phase supercritique est réalisée à environ 350°C dans un milieu éthanol supercritique.

Le document Silicates Industriels, 1994, 3-4, pages 141 à 143, décrit l'utilisation de fluides supercritiques en tant que milieux réactionnels pour la synthèse de poudres céramiques. Les poudres formées sont des poudres d'oxydes de titane et du spinelle MgAl₂O₄. Le fluide supercritique utilisé est un milieu éthanol supercritique et la température de réaction est de 360°C environ.

### 2°) Exposé de l'invention

L'invention se rapporté à un procédé de fabrication d'un produit à base d'oxyde métallique, simple ou mixte, ou d'oxyde de silicium, à partir d'une charge de précurseur(s) comprenant un ou plusieurs précurseur(s) métallo-organique(s), ledit procédé comprenant la mise en contact de la charge de précurseur(s) avec un milieu réactionnel comprenant du CO₂ supercritique, à une température de 31 à 50°C et une pression supercritique de 10⁷ à 5 x 10⁷ Pa pour former, à partir dudit précurseur, un produit à base d'oxyde métallique simple ou mixte, ou d'oxyde de silicium ; et la séparation dudit produit à basé d'oxyde métallique simple ou mixte, ou d'oxyde de silicium, ou de produit(s) métallo-organique(s), du milieu réactionnel par détente du CO₂ supercritique à une pression inférieure à la pression supercritique.

La charge de précurseur(s) peut comprendre un ou des précurseur(s) métallo-organique(s) seul(s), mais peut aussi comprendre, en plus de précurseur(s) métallo-organique(s), des composés organiques, tels que, par exemple, l'isopropanol, l'acétyl acétone, etc.

Le ou les précurseur(s) métallo-organique(s) sont, par exemple, des précurseurs alkoxydes, identiques à ceux employés en voie sol-gel.

Ces précurseurs peuvent être modifiés notamment par des agents complexants tels que l'acétylacétone qui bloque les fonctions alcoxy et diminue donc la réactivité de l'alcoxyde envers l'hydrolyse.

Ces précurseurs alkoxydes sont, par exemple, le tétraéthoxysilane, l'isopropoxyde de titane (IV), l'isopropoxyde d'aluminium, l'éthoxyde de magnésium, ou un mélange de ces alkoxydes.

Lorsque le précurseur alkoxyde est de l'isopropoxyde de titane (IV), il peut, par exemple, être utilisé seul, en tant que charge de précurseur, c'est-à-dire sans solvant.

Lorsque le précurseur alkoxyde est du tétraéthoxysilane, il peut, par exemple, être utilisé seul, en tant que charge de précurseur, c'est-à-dire sans solvant.

Lorsque le précurseur alkoxyde est un mélange d'isopropoxyde d'aluminium et d'éthoxyde de magnésium, la charge de précurseurs peut, par exemple; être formée d'un mélange d'une première et d'une deuxième solutions individuelles : la première solution individuelle comprenant, par exemple, de l'éthoxyde de magnésium, de l'isopropanol et de l'acétyl acétone, et la deuxième solution individuelle comprenant, par exemple, de l'isopropoxyde d'aluminium, de l'isopropanol et de l'acéthyl acétone.

Selon le procédé de l'invention, le milieu réactionnel peut contenir du CO₂ supercrique seul, ou du CO₂ supercritique en présence d'un co-solvant, par exemple, de l'eau ou de l'éthanol. Le co-solvant est de préférence en concentration minoritaire dans le milieu réactionnel.

Lorsque le co-solvant est de l'eau, le procédé consiste en une hydrolyse-condensation de l'alkoxyde en milieu CO₂ supercritique. L'eau permet, par exemple, dans le cas des produits à base d'oxyde de silicium et d'oxyde de titane, d'obtenir une large panoplie de textures du produit fabriqué.

Lorsque le co-solvant est, par exemple, de l'éthanol :
- ce dernier va permettre de solubiliser préférentiellement le(s) précurseur(s) métallo-organiques dans le CO₂ supercritique et donc permettre la réaction proprement dite ;
- l'éthanol en tant qu'alcool permet aussi d'associer les molécules de précurseurs métallo-organiques sous la forme de dimère, ou de trimère, les rendant ainsi plus ou moins réactives;
- il peut s'échanger avec les groupements alkoxydes du ou des précurseur(s) et modifier sa réactivité ; par exemple, l'échange entre un groupement propoxyde et l'éthanol sur le métal pour former un éthoxyde augmente la réactivité du précurseur.

D'autres co-solvants peuvent être utilisés dans le même but, tels que les solvants aliphatiques ou aromatiques ou bien encore, les solvants halogénés.

Selon l'invention, la mise en contact de la charge, comprenant ledit précurseur avec un milieu réactionnel comprenant du CO₂ supercritique, peut être effectuée, par exemple, pendant une durée allant jusqu'à 72 heures, de préférence 20 heures. Un temps important de contact entre la charge de précurseur(s), comprenant un ou plusieurs précurseur(s) organique(s), et le milieu comprenant le CO₂ supercritique permet une bonne initiation du processus de formation du produit à base d'oxyde métallique.

Le CO₂ supercritique est utilisé en tant que solvant et en tant que milieu réactionnel, il a les propriétés physiques et chimiques d'un liquide et d'un gaz. Le CO₂ supercritique favorise la collision des molécules dans le milieu réactionnel et de ce fait la cinétique de réaction entre ces molécules.

Selon l'invention, on utilise un milieu réactionnel comprenant du CO₂ supercritique, à une température de 31 à 100°C, de préférence de 31 à 50°C et de toute préférence de 40°C.

La pression supercritique peut être par exemple de 10⁷ à 5 x 10⁷ Pa, de préférence de 3 x 10⁷ Pa.

Ce procédé est donc tout à fait différent de celui décrit dans le document Silicates Industriels, 1994, 3-4, pages 141 à 143, dans lequel le milieu supercritique est un milieu éthanol supercritique, la température supercritique est de l'ordre de 360°C.

La séparation du produit à base d'oxyde formé, du milieu réactionnel, peut être effectuée par détente du CO₂ supercritique, à une pression inférieure à la pression supercritique du CO₂ et à température constante. Cette détente du CO₂ supercritique peut être réalisée suivant plusieurs modes, par exemple, en "une seule fois", pour récupérer en une seule fois la totalité des produits à base d'oxyde formés.

La détente supercritique peut aussi être réalisée en plusieurs fois par paliers de détente, permettant d'obtenir des fractions différentes du produit formé, qui se diversifient par la taille et/ou la structure des particules qui composent ce produit.

Lorsque la détente est effectuée par paliers, les paliers de détente correspondent chacun, de préférence, à des chutes de pression de 10⁵ à 5 x 10⁶ Pa.

La détente du CO₂ peut aussi être réalisée de manière progressive sans palier de détente. Cette détente progressive est aussi appelée "détente lente".

Selon le mode de détente (rapide par palier, ou progressif), on peut orienter la croissance ou la formation vers une morphologie "particulaire ou fibrilaire". Ceci a, par exemple, été mis en évidence en utilisant l'alkoxyde de silicium.

Lorsque la détente est progressive, elle est de 10⁵ à 10⁷ Pa/min., de préférence de 10⁵ à 10⁶ Pa/min., de toute préférence de 5 x 10⁵ Pa/min.

Le procédé selon l'invention peut être réalisé dans tout système comprenant les éléments suivants : une réserve de CO₂ à l'état liquide, une pompe CO₂ haute pression, un échangeur chaud servant à amener le CO₂ superpressé à l'état supercritique, une cuve de réaction pressurisable et étanche, par exemple un autoclave, dans laquelle est effectuée la mise en contact de la charge de précurseur(s) et du milieu réactionnel comprenant le CO₂ supercritique, des moyens de détente de la pression supercritique, et des moyens de récupération des produits formés. Ces éléments étant reliés par un circuit étanche et pressurisable.

Ce type d'installation permet, par exemple, de récupérer, par une détente du CO₂ supercritique, les produits formés directement dans la cuve de réaction. Cela peut, par exemple, être le cas de la détente du CO₂ SC en "une seule fois", décrit ci-dessus, pour la récupération en une seule fois de la totalité des produits à base d'oxyde(s) formés dans la cuve de réaction. La détente du CO₂ s'effectuera, par exemple, en faisant sortir le CO₂ par des évents.

Lorsque l'on utilise un co-solvant, par exemple, l'eau ou l'éthanol, on peut mettre en série, dans le circuit étanche, avec la première cuve de réaction, une deuxième cuvé, appelée ci-après cuve de solvant, pressurisable et étanche, par exemple un deuxième autoclave, comprenant le co-solvant. Dans ce cas, lors de l'utilisation d'un co-solvant, le CO₂ est amené tout d'abord dans le deuxième autoclave contenant le co-solvant, c'est-à-dire l'eau ou l'éthanol, puis il est amené dans la cuve de réaction. Dans ce cas, le produit peut également être récupéré "en une seule fois", dans la cuve de réaction, en faisant sortir le CO₂, par exemple, par des évents.

Pour obtenir des fractions différentes du produit formé qui se diversifient par la taille et/ou la structure des particules qui composent ce produit, à partir du milieu réactionnel contenu dans l'extracteur, on peut utiliser un système permettant des détentes contrôlées du CO₂ supercritique suivies de récupérations successives des produits. La récupération du produit est ici réalisée par paliers de détente. Le système est relié à la cuve de réaction par un circuit étanche et pressurisable.

Un exemple d'un tel système est le système de séparation décrit dans la demande de brevet EP-A-0 238 527. Ce système comprend différents séparateurs, appelés "séparateurs cyclones", et permet de fractionner les produits issus de la mise en contact de la charge de précurseur(s) avec le milieu réactionnel comprenant du CO₂ supercritique. Les séparateurs cyclones fonctionnent selon le principe selon lequel :

une baisse de pression, ou détente, d'un solvant supercritique entraîne une baisse du pouvoir solvant de ce solvant supercritique. Ainsi, une baisse de pression d'un mélange supercritique entraîne une baisse de solubilité de produits qui y sont dissous.

Dans ce séparateur cyclone, la détente est associée à un "effet cyclonique", c'est-à-dire que le mélange supercritique est injecté dans la partie supérieure du séparateur cyclone (autoclave de forme conique), tangentiellement à la paroi. Ce type d'injection accentue la ségrégation entre le solvant supercritique et les produits qui y sont dissous, le solvant est évacué par la partie supérieure du séparateur cyclone, tandis que le produit est extrait dans la partie basse de ce séparateur cyclone.

Le mélange peut, par exemple, subir une première détente dans un premier séparateur cyclone, cette première détente permettant de recueillir une première fraction comprenant des produits à base d'oxyde(s) les moins solubles dans le CO₂ supercritique, c'est-à-dire les plus lourds.

Le milieu réactionnel issu de cette première détente peut, par exemple, être conduit à travers un circuit étanche et pressurisable vers un deuxième séparateur cyclone afin de subir une seconde détente et permettre de recueillir une deuxième fraction comprenant des produits à base d'oxyde moins lourds que ceux recueillis dans la première fraction.

A la même pression supercritique que celle du deuxième séparateur cyclone, le mélange issu de ce deuxième séparateur cyclone peut, par exemple, être conduit dans une colonne de récupération comprenant du CO₂ liquide. Les produits à base d'oxyde les plus solubles, c'est-à-dire les plus légers, sont alors récupérés dans une fraction ultime.

Pour récupérer le produit par détente lente du CO₂ supercritique, un système analogue à celui décrit pour les détentes par paliers peut, par exemple, être utilisé.

Selon l'invention, la récupération du produit à base d'oxyde métallique simple ou mixte, ou d'oxyde de silicium, peut être suivi d'une étape de traitement de maturation dudit produit pendant une durée allant, par exemple, jusqu'à 45 jours. Ce traitement de maturation, postérieur au traitement supercritique est, de préférence, de l'ordre de 30 jours.

Le traitement de maturation peut être effectué dans le milieu CO₂ supercritique ou hors de celui-ci.

Le traitement de maturation est, par exemple, réalisé à température ambiante, par exemple à environ 25°C.

Il permet la croissance des particules à partir des espèces formées dans le CO₂SC en présence ou non de co-solvant, c'est-à-dire la formation de matériaux définitifs.

Lorsque ce traitement est réalisé dans le milieu CO₂ supercritique, il est effectué à une pression allant de 10⁷ à 5 x 10⁷ Pa.

Selon le procédé de l'invention, lorsque le produit désiré est un produit à base d'oxyde de titane, le précurseur organique peut être l'isopropoxyde de titane (IV). Ainsi, la charge de précurseur(s) comprendra de l'isopropoxyde de titane (IV).

Lorsque le produit désiré est un produit à base d'oxyde de silicium, le précurseur organique peut être le tétraéthoxysilane. Ainsi, la charge de précurseur(s) comprendra du tétraéthoxysilane.

Lorsque le produit désiré est un produit à base d'oxydes de magnésium et d'aluminium, les précurseurs organiques peuvent être l'éthoxyde de magnésium et l'isopropoxyde d'aluminium. Ainsi, la charge de précurseurs comprendra de l'éthoxyde de magnésium et de l'isopropoxyde d'aluminium.

Le procédé de l'invention permet d'élaborer de nouveaux types de matériaux à base d'oxydes choisis parmi un oxyde de titane, d'aluminium, de magnésium, de thorium, de silicium, de l'yttrium, de baryum, de béryllium, de zirconium, de vanadium, d'hafnium, de scandium, de chrome, de niobium, de molybdène, de lanthane, de tantale, de tungstène, etc., en utilisant le CO₂ supercritique comme milieu réactionnel.

Les précurseurs alkoxydes utilisés sont les mêmes que ceux employés classiquement en voie sol-gel et leur mise en présence avec du CO₂ à l'état supercritique, a conduit à l'obtention de produits originaux sous forme de liquide, gel, poudre, fibre, etc.

Par exemple, pour des produits à base d'oxyde de Si, les manipulations effectuées conduisent à la formation d'un plus large spectre de textures que celles observées dans l'art antérieur. Les textures obtenues sont, par exemple, sous forme de fibres, petites particules sphériques avec ou sans pointes, ogives, gangues, etc.

Les conditions opératoires, par exemple, le choix du co-solvant, du mode de détente, du niveau de prélèvement et du temps de contact permettent d'orienter la texture du produit final désiré. En particulier, des gels de Si humides fabriqués selon le procédé de l'invention présentent des volumes poreux (mesurés par thermoporométrie) d'environ 0,5 à 1,5 cm³.g⁻¹ bien supérieurs à ceux mesurés habituellement sur des gels de Si obtenus par voie sol-gel classique à partir du même précurseur. De plus, des gels séchés à 100°C conservent des volumes poreux élevés de 0,5 à 0,7 cm³/g et des surfaces spécifiques élevées de 480 à 760 m²/g.

Pour des produits à base d'oxyde de Ti, le procédé de l'invention permet, en outre, la formation de poudre sèche amorphe ou en solution qui présente des caractéristiques de texture très intéressantes en comparaison avec les poudres obtenues classiquement par voie sol-gel. En particulier, des surfaces spécifiques de poudre allant d'environ 400 à 500 m².g⁻¹, ont été obtenues, c'est-à-dire deux fois plus élevées que celles obtenues par voie sol-gel classique à partir du même précurseur, pour une granulométrie plus faible et relativement homodispersée. Le volume poreux de la poudre d'oxyde de titane obtenue par le procédé de l'invention est de 0,2 à 0,3 cm³.g⁻¹.

D'un point de vue pratique, la morphologie sphérique des poudres obtenues par le procédé de l'invention entraîne une meilleure réactivité au frittage jusqu'à 1100°C. Ce type de poudre, prétraitée à 450°C avant compactage, permet donc d'accéder à des matériaux consolidés à plus basse température que ceux dérivés du procédé sol-gel classique.

Par exemple, pour les produits à base d'oxydes de Mg et de Al, le procédé de l'invention a conduit à la formation de plusieurs formes cristallines d'acétyl acétonate.

Dans l'ensemble, les produits formés sont d'un type nouveau et ils permettent de conduire à l'élaboration de matériaux aux propriétés intéressantes.

Il est possible de citer, par exemple, les membranes de filtration tangentielle à couche comprimée en TiO₂ et les catalyseurs.

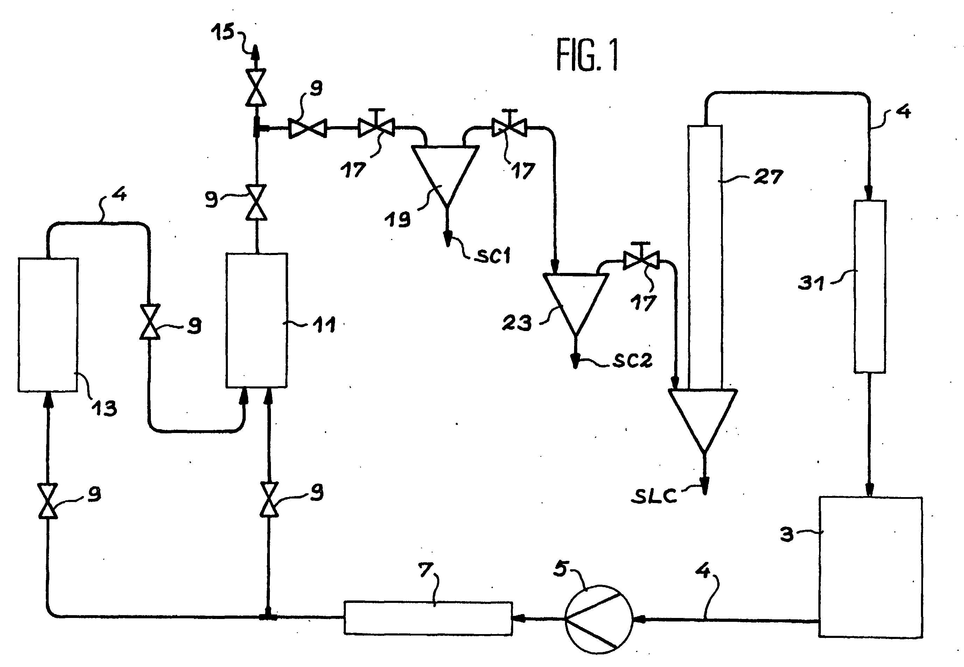

Les caractéristiques et avantages de l'invention apparaitront mieux à la lecture de la description qui va suivre. Cette description porte sur des exemples de réalisation, donnés à titre explicatif et non limitatif, en se référant à la figure annexée.

### 3°) Brève description de la figure

La figure unique est une représentation schématique d'un exemple d'une installation pour la mise en oeuvre du procédé de fabrication d'un oxyde selon l'invention.

### 4°) Exposé détaillé de modes de réalisation de l'invention

Un exemple de dispositif permettant la mise en oeuvre du procédé selon l'invention est schématisé sur la figure unique. Ce dispositif comprend :
- une réserve (3) de CO₂ à l'état liquide,
- une pompe (5) de CO₂, haute pression,
- un échangeur (7) chaud servant à amener le CO₂ surpressé à l'état supercritique,
- une cuve de réaction (11), destinée à contenir le précurseur d'oxyde et le milieu réactionnel,
- une cuve de solvant (13) destinée à contenir un co-solvant, tel que l'éthanol, ou l'eau,
- deux séparateurs cyclones (19, 23),
- un séparateur (27) liquide + colonne, et
- un échangeur froid (31).

Ces éléments sont montés en un circuit fermé et connectés entre eux grâce à un circuit étanche (4). Des vannes manuelles (9) et des vannes de détente (17) sont montées sur le circuit étanche pour contrôler l'arrivée et la sortie des produits de chaque élément du dispositif utilisé.

La cuve de réaction (11) et la cuve de solvant (13) sont des cuves pressurisables et étanches et sont, dans cet exemple, des autoclaves.

Ce dispositif comprend, en outre, des évents (15).

Lorsque le milieu réactionnel contient du CO₂ supercritique seul, le CO₂ supercritique provenant de l'échangeur (7) chaud passe directement dans la cuve de réaction (11) contenant la charge de précurseur alkoxyde.

Lorsque le milieu réactionnel comprend du CO₂ supercritique en présence d'un co-solvant, par exemple, de l'eau ou de l'éthanol, le CO₂ supercritique est d'abord conduit dans la cuve de solvant (13) contenant le co-solvant, puis, grâce à la vanne manuelle située entre la cuve de solvant (13) et la cuve de réaction (11) contenant le précurseur alkoxyde, le CO₂ supercritique, chargé de co-solvant, est amené dans la cuve de réaction (11).

Si le produit à base d'oxyde formé doit être récupéré directement dans la cuve de réaction, c'est-à-dire dans l'extracteur, il est possible de détendre en pression l'installation, en faisant sortir directement le CO₂ par les évents (15).

Pour une récupération fractionnée du produit à base d'oxyde contenu dans le CO₂ supercritique, le mélange produit à base d'oxyde formé et de CO₂ supercritique est conduit dans le système permettant des détentes contrôlées du CO₂ supercritique, immédiatement suivi de récupérations successives des produits.

Ce système de séparation est décrit dans la demande de brevet EP-A-0 238 527.

Les séparateurs sont les séparateurs cyclones (19, 23). Le mélange produit/CO₂ supercritique subit une première détente dans un premier séparateur cyclone (19) au moyen d'une première vanne de détente (17) et les produits les moins solubles, c'est-à-dire les plus lourds, sont recueillis dans une première fraction (27), noté ci-après SC1.

Le mélange issu de ce séparateur cyclone (19) peut ensuite être conduit au moyen d'une deuxième vanne de détente (17) vers un deuxième séparateur cyclone (20). Ce mélange subit alors une seconde détente et une deuxième fraction (25) est recueillie, notée ci-après SC2.

Au moyen d'une troisième vanne de détente (17), le mélange issu du deuxième séparateur cyclone entre dans une colonne de récupération (27), ou séparateur (27), contenant du CO₂ liquide et les solutés les plus solubles, c'est-à-dire les plus légers, sont alors récupérés dans l'extrait (29), noté ci-après SLC.

Le CO₂ gazeux restant est un CO₂ basse pression, c'est-à-dire à une pression de 7 x 10⁶ à 8 x 10⁶ Pa, il ne contient plus de produit à base d'oxyde. Ce CO₂ basse pression est liquéfié dans un échangeur froid (31) à la sortie de la colonne de récupération (27). Une fois refroidi, le CO₂ devient liquide et il rejoint la réserve (3) de CO₂ liquide fermant ainsi le circuit de l'installation utilisée.

Dans les exemples de mise en oeuvre du procédé de l'invention qui vont suivre, deux séries de manipulations ont été réalisées.

Une première série de manipulations, notées C, est destinée à connaître la cinétique d'extraction du produit à base d'oxyde. Ces manipulations sont des essais d'extraction directe, dans lesquels on fait circuler le CO₂ supercritique sur la charge de précurseur(s), avec ou sans la présence d'un co-solvant. La récupération des extraits issus de ces manipulations C est effectuée dans les séparateurs (19), (23) et (27), pour obtenir respectivement les fractions SC1, SC2 et SLC.

Les manipulations C sont effectuées avec un débit de CO₂ supercritique constant, traversant la cuve de réaction, ou, en présence d'un co-solvant, traversant la cuve de solvant, puis la cuve de réaction. Ce débit de CO₂ permet d'entraîner les produits formés dans la cuve de réaction immédiatement vers le système de séparateurs. Des billes de verre ont été placées dans l'extracteur de manière à éviter l'entraînement de la charge par le CO₂ supercritique. Le débit de CO₂ supercritique est d'environ 10 kg/h.

Une deuxième série de manipulations, notées E, est destinée à connaître l'effet du temps de contact entre la charge de précurseur(s) et le CO₂ supercritique, avec ou sans la présence d'un co-solvant eau ou éthanol. Ces manipulations sont en fait des extractions après maturation.

Dans ces manipulations E, la charge de précurseur est mise en contact avec le CO₂ supercritique sous pression dans la cuve de réaction, pendant un temps de contact fixé de 0 à 72 heures, avec ou sans la présence de co-solvant.

La détente est ensuite effectuée à travers les séparateurs (19), (23) et (27) successifs et permet d'obtenir des extraits SC1, SC2 et SLC, respectivement.

Les conditions opératoires et la nomenclature de ces manipulations C et E sont rassemblées dans le tableau 1 ci-dessous.

**TABLEAU 1**

| **Nomenclature et conditions opératoires des manipulations** | | | | |
|---|---|---|---|---|
| Manipulations | Solvant | Pression (Pa) | Température (°C) | Mise en contact (heures) |
| C1 | CO₂ SC seul | 3 x 10⁷ | 40 | - |
| C2 | CO₂SC + H₂O | 3 x 10⁷ | 40 | - |
| E1 | CO₂ SC seul | 3 x 10⁷ | 40 | 20 |
| E2 | CO₂ SC + H₂O | 3 x 10⁷ | 40 | 20 |
| E3 | CO₂ SC + H₂O | 2 x 10⁷ | 40 | 20 |
| E4 | CO₂ SC + C₂H₅OH | 3 x 10⁷ | 40 | 20 |

La masse de précurseur - alkoxyde, versée dans la cuve de réaction, est comprise entre 40 et 50 g.

Lors des manipulations avec un co-solvant, environ 200 g d'eau ou d'éthanol, suivant le cas, sont versés dans la cuve de solvant.

Les échantillons analysés peuvent avoir, en fin de manipulation, quatre origines possibles : le résidu de la charge de précurseur(s), noté RES, les extraits SC1, SC2 et SLC. Les analyses de ces extraits obtenus ont portées sur :
- le bilan massique de la fabrication de produits,
- la morphologie des produits formés, déterminée par microscopie électronique à balayage (MEB) et microscopie à effet de champ,
- la nature chimique des poudres, déterminée par spectroscopie infrarouge (FTIR) pour les carbonates et par spectrométrie de rayons X à dispersion d'énergie (EDX) et par diffraction de rayons X pour la cristallinité,
- la texture poreuse des gels par thermoporométrie, et des poudres par absorption-désorption de N₂,
- les phénomènes de cristallisation, et la stabilité thermique déterminés par analyse thermique différentielle (ATD) et analyse thermogravimétrique (ATG), respectivement, et
- le comportement au frittage déterminé par dilatométrie.

### Exemple 1 : Fabrication d'un produit à base d'oxyde de silicium

Dans cet exemple, la charge de précurseur est constituée de tétraéthoxysilane pur à 98 %, de poids moléculaire 208,33 g.mol.⁻¹ et de densité d = 0,934. Ce produit est par exemple, disponible dans le catalogue ALDRICH et comporte le numéro 13.190.3.

Pour ce précurseur, le tétraéthoxysilane, des manipulations E particulières ont été réalisées en plus de celles décrites précédemment :
- à partir des conditions opératoires de la manipulation E2, le temps de mise en contact a été fixé à 2 heures, 10 heures, 20 heures et 72 heures,
- à partir des conditions opératoires de la manipulation E2, il a été procédé à des détentes rapides, ci-après notées DR, d'une durée de 30 minutes et à des détentes lentes, ci-après notées DR, d'une durée de 3 heures.

Ces détentes rapides et lentes ont été réalisées en faisant passer la pression du CO₂ supercritique de 3 x 10⁷ à 10⁵ Pa.

Le tableau 2 présente un bilan massique de la fabrication d'un produit à base d'oxyde de silicium selon le procédé de l'invention.

Le tableau 3 présente un bilan morphologique des produits obtenus en fonction des conditions opératoires du procédé de l'invention dans cet exemple.

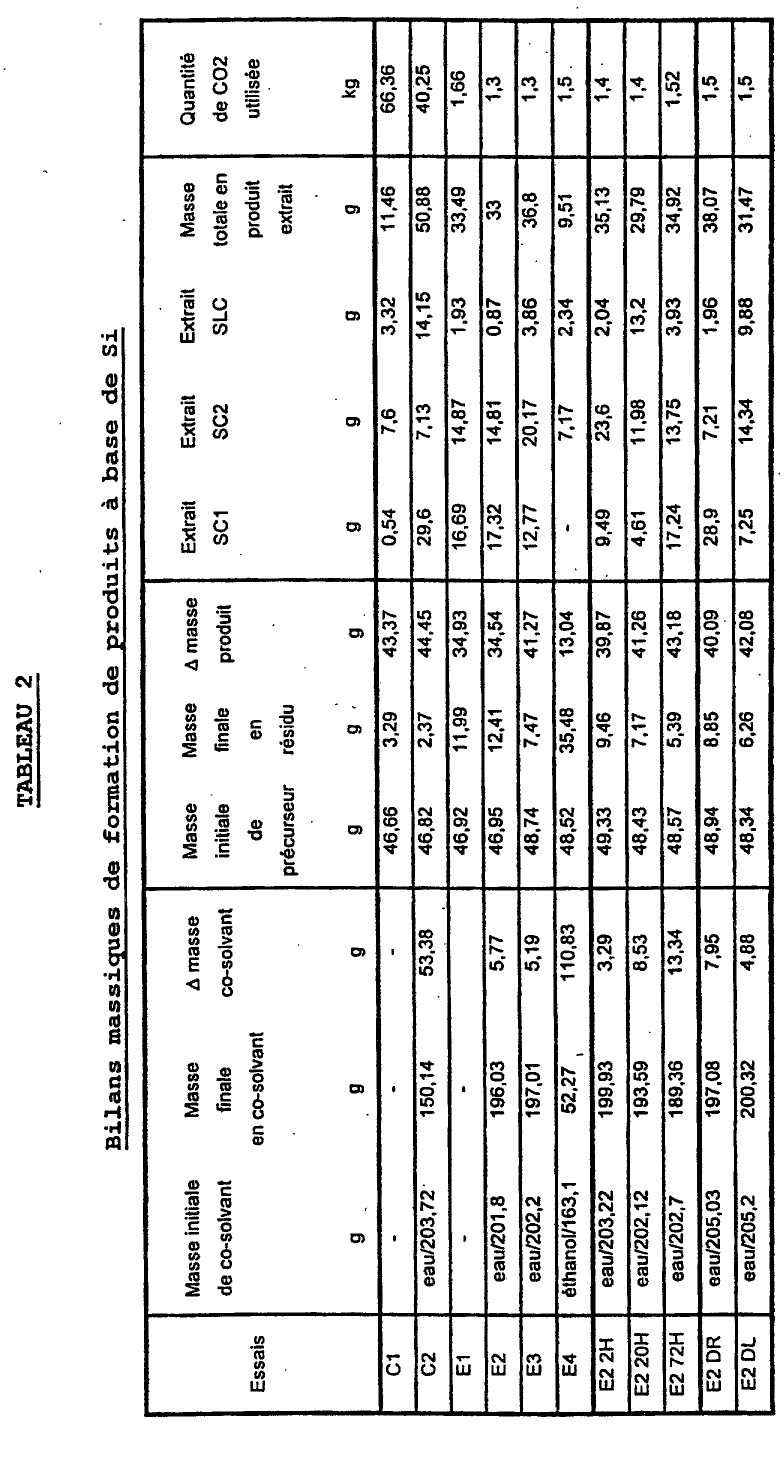

**TABLEAU 3**

| **Bilan morphologique en fonction des conditions opératoires** | | | |
|---|---|---|---|
| Essai | Prélèvement | Temps de contact (heures) | Bilan morphologique |
| C2 | SLC | 0 | Presque dense |
| C2 | SC2 | 0 | Vaporeuse (très petites fibres entremêlées) |
| | | | |
| E1 | SLC | 20 | Presque dense |
| E1 | SC2/SLC | 20 | Grosses et petites fibres entremêlées |
| | | | |
| E2 | SC2/SLC | 20 | Grains épars + boules + gangue |
| E2 | RES | 2 | Grains épars + boules + fibres mal formées |
| E2 | RES | 10 | Faisceaux de fibres (L ∼ 10 µm) parallèles |
| E2 | RES | 72 | Texture obus + gangue de liaison |
| E2 | SLC | 2 | Boules à épines fines + grains + gangue |
| E2 | SLC | 10 | Faisceaux de fibres (L ∼ 10 µm) parallèles |
| E2 DR | RES | 20 | film de fibres à zones plates et parallèles (L ∼ 40 µm) |
| E2 DR | SLC | 20 | Boules à épinas fines + grains + gangue |
| | | | |
| E2 DL | RES | 20 | Croissance orientée de "fibres" courtes (L ∼ 20 µm) coniques |
| E2 DL | SLC | 20 | Fibres longues souples emmêlées |
| | | | |
| E3 | RES | 20 | Texture organisée en obus + gangue |
| E3 | SC2 | 20 | Grosses boules (5 à 10 µm) + gangue (+ épines) |
| E3 | SLC | 20 | Fibres mal formées + gangue + texture orientée de grains cylindriques courts |
| | | | |
| E4 | RES | 20 | Grains homogènes (~ 50 nm) |
| E4 | SLC | 20 | Texture granuleuse + gangue |
| E4 | SC2 | 20 | Texture presque dense |

Les manipulations particulières concernant le temps de mise en contact ont montré que dans le résidu RES (présence de H₂O et pression du CO₂ supercritique de 3 x 10⁷ Pa), des temps de mise en contact trop faibles, c'est-à-dire inférieurs à 10 heures, conduisent à des mélanges inhomogènes de plusieurs textures (grains, boules, fibres, gangue). Des temps de contact élevés, par exemple de 72 heures, conduisent à des textures organisées en forme d'ogives. Une texture similaire à cette dernière a été obtenue avec un temps de contact plus faible, de 20 heures, et une pression plus faible de 2 x 10⁷ Pa.

Au niveau des prélèvement SLC, un temps de contact de 2 heures conduit à une texture boule à fibres et un temps de contact de 10 heures conduit à une texture orientée fibreuse.

Les manipulations particulières concernant le mode de détente ont montré que pour les extraits SLC dans le cas d'une détente lente, des fibres bien formées longues et homogènes sont obtenues. Dans le cas d'une détente rapide, on obtient une compétition entre des textures sphériques et des fibres bien orientées.

Dans le cas des résidus, des fibres courtes et bien orientées sont obtenues quel que soit le mode de détente.

Les analyses des échantillons E1 SLC, C2 SLC et E4 RES, par spectroscopie IR, ont montrées des bandes caractéristiques des liaisons Si-O-Si et Si-OH, et n'ont pas montrées de bandes caractéristiques d'une carbonatation.

On notera aussi que les extraits étudiés ne présentent pas de bandes CHx caractéristiques de l'alkoxyde de départ, sauf lorsque l'éthanol est utilisé comme co-solvant.

La texture poreuse des gels obtenus lors des manipulations C2 et séchés à 100°C, a été analysée par adsorption-désorption d'azote.

Le tableau 4 suivant montre les caractéristiques poreuses de ces trois gels étudiés :

**TABLEAU 4**

| **Caractéristiques poreuses des gels séchés de silice** | | | | | | |
|---|---|---|---|---|---|---|
| Echantillons (gel séché à 100°C) | Surface_{BET} (m².g⁻¹) | Surface microporeuse (m².g⁻¹) | Volume poreux total (cm³.g⁻¹) | Volume microporeux (cm³.g⁻¹) | Distribution des tailles de pores | |
| | | | | | MESO/MACRO (DIAMETRE) | MICRO (RH) |
| C2 SC2 partie inférieure | 764 | 340 | 0,54 | 0,16 | Etroite centrée 3,8 nm | Double 0,4 et 0.8 nm |
| C2 SC2 surnageant | 596 | 83 | 0,52 | 0,03 | Etroite + queue centrée 3.8 nm | Simple 0,4 nm |
| C2 SLC | 483 | 268 | 0,73 | 0,12 | Très large centrée 50 nm | Simple 0,28 nm |

Les isothermes d'adsorption-désorption d'azote des gels séchés à 100°C présentent typiquement des hystérésis caractéristiques de systèmes mésoporeux.

Les surfaces spécifiques des gels analysés par la méthode de Brunauer Emmet et TELLER (BET), sont relativement élevées et comprises entre environ 480 et 760 m².g⁻¹.

La méthode BJH (Barret Joyner et Hallenda) a été utilisée pour étudier la partie méso-poreuse des gels C2SC2 et C2SLC.

La partie microporeuse des gels C2 SC2 et C2 SLC et, plus particulièrement, la distribution des rayons hydrauliques a été étudiée par la méthode MP de Brunauer. Les trois gels étudiés présentent une double distribution de taille de pores : l'une dans le domaine microporeux et l'autre dans le domaine méso-macroporeux. Les gels C2 SC2 (surnageant et partie inférieure) présentent deux distributions homodisperses en taille de pore alors que celles du gel SLC s'étalent du domaine microporeux jusqu'à des pores de 200 nm de diamètre.

Le volume microporeux est plus faible dans le gel C2SC2 partie supérieure que dans les gels SC2 partie inférieure et SLC.

L'étude par thermoporométrie du gel C2 SC2 montre que le gel opaque vaporeux de la partie supérieure et présente une distribution de taille de pore très large étalée de 3 à 20 nm et le volume poreux correspondant est très élevé (1,554 cm³.g⁻¹). Le gel liquide de la partie inférieure présente une distribution de taille de pores relativement étroite centrée sur 3,5 nm et un volume poreux relativement élevé de 0,683 cm³.g⁻¹.

Ces résultats sont tout à fait inhabituels et montrent que le procédé permet d'accéder à des gels à textures très vaporeuses.

Les analyses thermogravimétriques montrent que les gels C2 séchés perdent entre 35 et 50 % de leur poids quand on les chauffe jusqu'à 900°C, température à laquelle cette perte de poids s'est stabilisée. Le gel C2 SC2 surnageant est celui qui perd le plus de poids, c'est-à-dire jusqu'à 50 %, tandis que le gel de la partie inférieure C2 SC2 perd 44 % et le gel C2 SLC ne perd que 35 % de son poids. Ces pertes correspondent à des pertes de solvant libre jusqu'à 200°C, puis à des pertes d'eau liée et à des condensations de groupement hydroxyles de surface à plus haute température.

Les matériaux obtenus, par le procédé selon l'invention, à partir d'un précurseur métallo-oganique de Si classique présentent des morphologies tout à fait originales par rapport à celles observées dans l'art antérieur, après une synthèse sol-gel classique.

En fonction des conditions opératoires de ce nouveau procédé, c'est-à-dire les niveaux de prélèvement et de détente, le type de co-solvant, le temps de mise en contact, des textures désorganisées ou organisées ont été obtenues.

En particulier, des gels de Si ont été fabriqués et ils présentent des volumes poreux (1,5 cm³.g⁻¹) bien supérieurs à ceux mesurés sur des gels de Si classiques de l'art antérieur. De plus, après séchage à 100°C, ces gels de silice peuvent présenter des surfaces spécifiques allant jusqu'à 764 m².g⁻¹.

D'autre part, les échantillons obtenus ne présentent pas, en règle générale, de traces de carbonatation, ce qui les rend aptes au frittage.

En conclusion, ces morphologies nouvelles de produits à base d'oxyde de silicium réalisés à partir d'un précurseur classique conduisent à la création de matériaux originaux à base de Si.

### Exemple 2 : Fabrication d'un produit à base d'oxyde de titane

Dans cet exemple, la charge de précurseur est constituée d'isopropoxyde de titane pur à 97 %, de poids moléculaire 284,26 g.mol.⁻¹ et de densité d = 0,955. Ce produit est par exemple, disponible dans le catalogue ALDRICH et comporte le numéro 20.527.3.

Les manipulations décrites dans le tableau 1 ont été effectuées, sans étudier l'influence du mode de détente, ni celle du temps de contact.

Pour l'ensemble des manipulations de types C et E, le procédé conduit, en fonction des conditions opératoires, à des produits amorphes d'aspects morphologiques macroscopiques et microscopiques variables.

Le tableau 5 présente les bilans massiques de formation de produits à base d'oxyde(s) métallique(s) selon le procédé de l'invention.

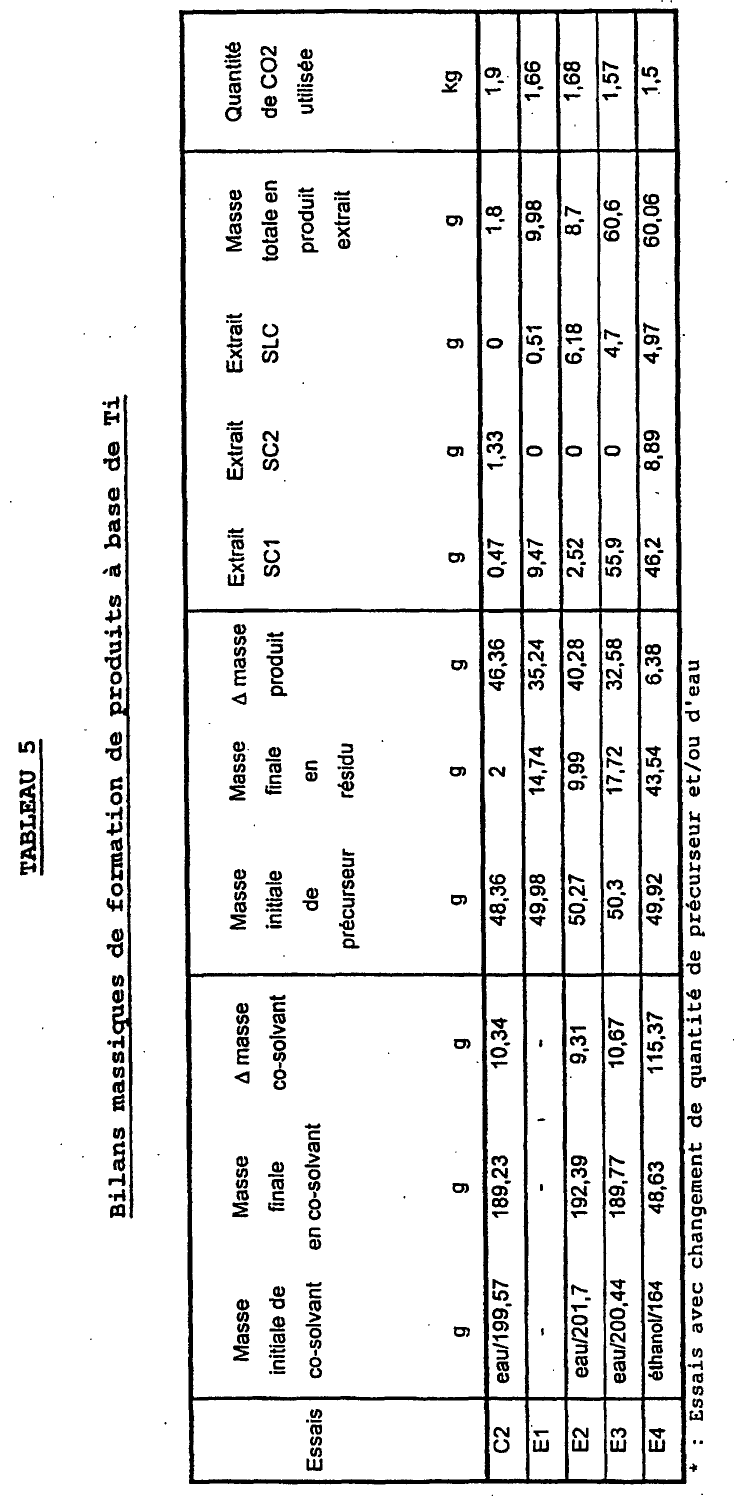

Le tableau 6 présente un bilan morphologique des produits obtenus et l'effet des conditions opératoires du procédé.

**TABLEAU 6**

| **Bilan morphologique** | | | |
|---|---|---|---|
| Essai | Prélèvement | Aspect texture | Diamètre des grains (µm) |
| C2 | RES | Grains sphériques homogènes en amas | 0,5 à 1 |
| C2 | SC1 | Grains sphériques en grappe | 0,2 à 1,5 |
| C2 | SC2 | Grains sphériques en amas denses | ∼ 0,1 |
| | | avec quelques billes plus grosses | 1,2 à 2 |
| | | | |
| E1 | SLC | Structure presque dense | |
| | | | |
| E2 | SLC | Structure dense et fissurée | |
| | | | |
| E3 | RES | Structure dense et fortement fissurée | |
| E3 | SC1 | Structure dense + structure poreuse par endroit | |
| | | | |
| E4 | RES | Grains sphériques homogènes en amas | ∼ 2 |
| E4 | SLC | Grains sphériques homogènes en amas | ∼ 0,1 |

Les extraits C2 et E4 conduisent à la formation d'une poudre. Les analyses des produits formés ont portées sur ces deux extraits.

Dans l'extrait C2 RES, à partir de 48 g de précurseur, c'est-à-dire d'isopropoxyde de titane (IV), environ 2 g d'une poudre "sèche" et pulvérulente de masse volumique apparente environ égale à 50 kg/m³ ont été récupérés de la cuve de réaction, 10 à 40 g d'eau ont été consommés. Cette poudre correspond au résidu RES noté ci-après C2 RES. A titre indicatif, dans le cas d'une transformation complète de 48 g d'isopropoxyde de titane en oxyde à base de titane, 13,4 g de TiO₂ auraient dû être récupérés avec une consommation de 12 g d'eau. Le rendement est donc de 15 %.

Les observations au microscope électronique à balayage révèlent que cette poudre est homogène et constituée de particules sphériques relativement désagglomérées de taille allant de 0,1 µm à 1 µm. Après calcination à 480°C, la taille des particules de la poudre n'évolue pratiquement pas, mais on observe la création de pontages entre les particules.

La spectroscopie IR de cette poudre a permis de mettre en évidence l'absence de carbonates dans la poudre. En effet, aucune bande d'absorption importante n'a été observée entre 1 300 et 1 500 cm⁻¹.

Les analyses thermique différentielle (ATD) ont permis de montrer que la poudre, au départ amorphe aux rayons X, cristallise de manière relativement nette à 392°C sous la forme anatase. La forme rutile commence à apparaître à partir de 700°C.

La texture poreuse de cette poudre C2 RES, séchée à 100°C a été analysée par adsorption-désorption d'azote. Cette analyse a également été réalisée sur les extraits C2 SC1 et C2 SC2. Les résultats de ces analyses sont présentés dans le tableau 7, résumant les caractéristiques poreuses de l'oxyde de titane des extraits C2 RES, C2 SC1 et C2 SC2.

**TABLEAU 7**

| **Caractéristiques poreuses de l'oxyde de titane** | | | | | |
|---|---|---|---|---|---|
| Echantillon | Surface_{BET} moyenne (m².g⁻¹) | Volume poreux total (cm³.g⁻¹) | Volume microporeux (cm³.g⁻¹) | r_{H} (nm) | R_{BJH} (nm) |
| C2 RES séché à 100°C | 437 | 0,235 | 0,203 | 0,45<r_{H}<0,7 | 1 |
| C2 SC1 | 337 | 0,192 | 0,160 | 0,45<r_{H}<0,7 | 1 |
| C2 SC2 | 424 | 0,285 | 0,180 | 0,4<r_{H}<0,9 | 1 à 10 |

La poudre C2 RES séchée à 100°C est donc essentiellement microporeuse avec un rayon hydraulique de pores r_{H} allant de 0,45 à 0,7 nm. Ce résultat correspond, avec une hypothèse de pores résultant d'un empilement de particules sphériques, à une distribution de pores allant de 1,2 à 2,0 nm.

Après traitement à 480°C, la poudre C2 RES devient mésoporeuse et perd une grosse partie de son volume poreux total, celui-ci chute jusqu'à 0,036 cm³/g. La surface spécifique chute donc aussi et atteint la valeur de 28 m²/g.

Les analyses ATG montrent que la poudre C2 RES contenant au départ de l'eau résiduelle visible par spectroscopie infrarouge, subit une perte de poids de 25 % jusqu'à 200°C, puis cette perte continue et se stabilise à 800°C pour une perte totale de poids de 46 %.

Une étude dilatométrique de la poudre C2 RES séchée à 100°C, puis compactée à 7,85x10⁸ Pa sous forme de pastilles a été effectuée. La pastille de poudre C2 RES avait une densité de 1,48, avant traitement. Cette étude a montré un retrait, c'est-à-dire une contraction de la pastille, de 1,15 % entre la température ambiante et 1 450°C. En fin de traitement, la pastille de poudre C2 RES avait une densité d'environ 1,5, ce qui correspond à 35 % de la densité théorique du rutile, cette dernière étant égale à 4,25.

Une autre expérience, a été effectuée sur la poudre C2 RES prétraitée à 450°C. La pastille compactée à 7,85x10⁸ Pa (8x10³ kgf/cm²) avait une densité avant traitement de 1,82 soit 42 % de la densité théorique du rutile. Cette étude a montré un retrait de 8 % entre l'ambiante et 850°C à 1 000°C ; et de 16,5 % entre l'ambiante et 1 500°C.

En fin de traitement, la pastille avait une densité de 3,7 ; ce qui correspond à 87 % de la densité théorique de rutile.

A titre comparatif, une poudre TiO₂ préparée par voie sol-gel, à partir du même précurseur que celui utilisé dans cet exemple est analysée. Cette poudre sera appelée ci-après poudre sol-gel. La poudre sol-gel a été séchée à 100°C. Cette poudre s'est avérée essentiellement microporeuse, avec quelques mésopores, et formée de grains compacts d'environ 8 nm.

Le tableau 8 suivant est un tableau comparatif montrant les caractéristiques poreuses de cette poudre sol-gel, et les caractéristiques poreuses de la poudre de l'extrait C2 RES.

**TABLEAU 8**

| **Comparaison des caractéristiques poreuses de la poudre sol-gel et de la poudre C2 RES de l'invention** | | | | | |
|---|---|---|---|---|---|
| Echantillon | Surface_{BET} (m².g⁻¹) | Volume poreux total (cm³.g⁻¹) | Volume microporeux (cm³.g⁻¹) | r_{H} (nm) | R_{BJH} (nm) |
| Poudre C2 RES séchée à 100°C | 437 | 0,235 | 0,203 | 0,45 à 0,7 | 1 |
| Poudre sol-gel séchée à 100°C | 218 | 0,119 | 0,116 | 0,35 à 1,1 | 0,9 à 2 |

Le rayon hydraulique de pores rH de la poudre sol-gel a une distribution plus large, allant de 0,35 à 1,1 nm, que celle de la poudre C2. Ce résultat correspond, avec une hypothèse d'empilement de particules sphériques, à une distribution de taille de pores allant de 1 à 3 nm.

L'analyse ATD de la poudre sol-gel séchée à 150°C pendant 4 heures met en évidence un large massif exothermique centré sur 396°C indiquant une cristallisation lente de la phase amorphe en anatase.

Une étude dilatométrique de la poudre sol-gel prétraitée à 450°C compactée à 7,85x10⁸ Pa sous forme de pastilles a été effectuée. La pastille de poudre sol-gel avait une densité de 2,43, soit 57 % de la densité du rutile, avant traitement. Cette étude a montré un retrait de 2,5 % entre la température ambiante et 800°C à 1 000°C, de 15 % entre la température ambiante et 1 250°C et de 17,5 % entre la température ambiante et 1 450°C. Une stabilisation était observée à 1 450°C. En fin de traitement, la pastille de poudre sol-gel avait une densité de 4,25, ce qui correspond à 100 % de densification.

Dans l'extrait E4, à partir de 49,92 g de précurseur, c'est-à-dire l'isopropoxyde de titane (IV), environ 43,54 g de poudre ont été récupérés.

Cette poudre, appelée E4, analysée par spectroscopie infrarouge a montré une absence de carbonates.

Après évaporation du solvant (éthanol) à 150°C pendant 3 heures, cette poudre s'avère constituée d'agrégats de grains sphériques d'environ 1 micron.

Le tableau 9 suivant montre les résultats de l'analyse texturale de cette poudre E4 par adsorption-désorption d'azote.

**TABLEAU 9**

| **Analyse texturale de la poudre E4** | | | | |
|---|---|---|---|---|
| Echantillon | Surface_{BET} (m².g⁻¹) | Volume poreux total (cm³.g⁻¹) | Volume microporeux (cm³.g⁻¹) | r_{BJH} moyen (nm) |
| Résidu E4 séché à 150°C | 135 | 0,0647 | 0,0641 | 0,2 à 0,7 |

La poudre E4 se révèle entièrement microporeuse (porosité intra granulaire), avec un volume poreux d'environ 0,064 cm³/g et un rayon hydraulique de pores, moyen, de 0,32 nm. Avec une hypothèse d'empilement de particules sphériques, ceci correspond à une taille moyenne de pores de 0,9 nm.

Les études ATG et ATD révèlent une cristallisation très nette et très fine à 373°C. Parallèlement, le produit subit une perte de poids importante d'environ 20 % entre 100 et 250°C, puis le poids se stabilise aux environs de 700°C pour une perte de poids totale de 27 %.

## Revendications

1. Procédé de fabrication d'un produit à base d'oxyde métallique, simple ou mixte, ou d'oxyde de silicium, à partir d'une charge de précurseur(s) comprenant un ou plusieurs précurseur(s) métallo-organique(s), ledit procédé comprenant la mise en contact de la charge de précurseur(s) avec un milieu réactionnel comprenant du CO₂ supercritique, à une température de 31 à 100°C et une pression supercritique de 10⁷ à 5 x 10⁷ Pa pour former, à partir dudit précurseur, un produit à base d'oxyde métallique simple ou mixte, ou d'oxyde de silicium ; et la séparation dudit produit à base d'oxyde métallique, simple ou mixte, ou d'oxyde de silicium, ou des produits métallo-organiques, dudit milieu réactionnel par détente du CO₂ supercritique à une pression inférieure à la pression supercritique.

2. Procédé selon la revendication 1, dans lequel le précurseur métallo-organique est choisi parmi un alcoxyde ou un alcoxyde modifié.

3. Procédé selon la revendication 2, dans lequel l'alkoxyde est choisi dans le groupe comprenant le tétraéthoxysilane, l'isopropoxyde de titane (IV), l'isopropoxyde d'aluminium, l'éthoxyde de magnésium, ou un mélange de ces alkoxydes.

4. Procédé selon la revendication 1 à 3, **caractérisé en ce que** le milieu réactionnel comprend, en outre, un co-solvant.

5. Procédé selon la revendication 4, **caractérisé en ce que** le co-solvant est de l'eau ou de l'éthanol.

6. Procédé selon l'une quelconque des revendications 1 à 5, dans lequel la mise en contact de ladite charge de précurseur(s) avec le milieu réactionnel est effectuée pendant une durée allant jusqu'à 72 heures.

7. Procédé selon la revendication 6, dans lequel la mise en contact de ladite charge de précurseur(s) avec le milieu réactionnel est effectuée pendant une durée de 20 heures.

8. Procédé selon la revendication 1, comprenant, en outre, après l'étape de séparation dudit produit à base d'oxyde métallique ou d'oxyde de silicium du milieu réactionnel, une étape de traitement de maturation dudit produit pendant une durée allant jusqu'à 45 jours, de préférence une durée de 30 jours.

9. Procédé selon la revendication 1, dans lequel la détente du CO₂ supercritique, pour la séparation du produit du milieu réactionnel, est réalisée en une seule fois.

10. Procédé selon la revendication 1, dans lequel la détente du CO₂ supercritique, pour la séparation du produit du milieu réactionnel, est progressive et de 10⁵ Pa/min. à 10⁷ Pa/min.

11. Procédé selon la revendication 1, dans lequel la détente du CO₂ supercritique, pour la séparation du produit du milieu réactionnel, est réalisée par paliers de 10⁶ à 5 x 10⁶ Pa environ.

12. Procédé selon la revendication 1 dans lequel le produit à base d'oxyde est choisi parmi un oxyde de silicium, un produit à base d'oxyde métallique choisi parmi un oxyde de titane, d'aluminium, de magnésium, de thorium, d'yttrium, de baryum, de béryllium, de zirconium, de vanadium, d'hafnium, de scandium, de chrome, de niobium, de molybdène, de lanthane, de tantale, de tunsgtène.

13. Procédé selon la revendication 1 dans lequel les conditions de mise en contact de la charge de précurseur(s) avec le milieu réactionnel de CO₂ supercritique et le mode de détente sont choisis en fonction des caractéristiques de texture et de porosité du produit que l'on veut obtenir.

14. Procédé de fabrication d'un produit à base d'oxyde de titane, selon l'une quelconque des revendications précédentes, dans lequel le précurseur est l'isopropoxyde de titane.

15. Procédé de fabrication d'un produit à base d'oxyde de silicium selon l'une quelconque des revendications 1 à 13, dans lequel le précurseur est le tétraéthoxysilane.

16. Procédé de fabrication d'un produit à base d'oxyde de magnésium et d'aluminium selon l'une quelconque des revendications 1 à 13, dans lequel le précurseur est un mélange d'éthoxyde de magnésium et d'isopropoxyde d'aluminium.

17. Produit à base d'oxyde métallique susceptible d'être obtenu par le procédé de la revendication 1, ledit produit étant une poudre d'oxyde de titane qui, lorsqu'elle est séchée à 100°C, présente une surface spécifique d'environ 400 à 500 m².g⁻¹ et un volume poreux de 0,2 à 0,3 cm³.g⁻¹.

18. Produit à base d'oxyde métallique susceptible d'être obtenu par le procédé de la revendication 1, ledit produit étant un gel de silice humide présentant un volume poreux d'environ 0,5 à 1,5 cm³.g⁻¹.

19. Produit à base d'oxyde métallique susceptible d'être obtenu par le procédé de la revendication 1, ledit produit étant un gel de silice qui, après avoir été séché à 100°C, forme un gel de silice sec présentant une surface spécifique d'environ 480 à 764 m².g⁻¹.

## Patentansprüche

1. Verfahren zur Herstellung eines Produkts auf Basis eines einfachen oder gemischten Metalloxids oder auf Basis von Siliciumoxid aus einer Beschickung von Vorläuferverbindung(en), die eine oder mehrere metallorganische Vortäuferverbindungen umfasst, wobei das Verfahren umfasst das Inkontaktbringen der Beschickung von Vorläuferverbindung(en) mit einem Reaktionsmedium, das superkritisches CO₂ umfasst, bei einer Temperatur von 31 bis 100 °C und einem superkritischen Druck von 10⁷ bis 5 x 10⁷ Pa, um aus der genannten Vorläuferverbindung ein Produkt auf Basis eines einfachen oder gemischten Metalloxids oder auf Basis von Siliciumoxid herzustellen, und das Abtrennen des genannten Produkts auf Basis eines einfachen oder gemischten Metalloxids oder auf Basis von Siliciumoxid oder der metallorganischen Produkte von dem Reaktionsmedium durch Entspannung des superkritischen CO₂ auf einen Druck unterhalb des superkritischen Druckes.

2. Verfahren nach Anspruch 1, bei dem die metallorganische Vorläuferverbindung ausgewählt wird aus einem Alkoxid oder einem modifizierten Alkoxid.

3. Verfahren nach Anspruch 2, bei dem das Alkoxid ausgewählt wird aus der Gruppe, die umfasst Tetraethoxysilan, Titan(IV)isopropoxid, Aluminiumisopropoxid, Magnesiumethoxid oder einer Mischung dieser Alkoxide.

4. Verfahren nach den Ansprüchen 1 bis 3, **dadurch gekennzeichnet, dass** das Reaktionsmedium außerdem ein Colösungsmittel umfasst.

5. Verfahren nach Anspruch 4, **dadurch gekennzeichnet, dass** das Colösungsmittel Wasser oder Ethanol ist.

6. Verfahren nach einem der Ansprüche 1 bis 5, bei dem das Inkontaktbringen der Beschickung von Vorläuferverbindung(en) mit dem Reaktionsmedium für eine Dauer von bis zu 72 h durchgeführt wird.

7. Verfahren nach Anspruch 6, bei dem das Inkontaktbringen der Beschikkung aus Vorläuferverbindung(en) mit dem Reaktionsmedium für eine Dauer ; von 20 h durchgeführt wird.

8. Verfahren nach Anspruch 1, das außerdem nach der Stufe der Abtrennung des Produkts auf Basis eines Metalloxids oder auf Basis von Siliciumoxid von dem Reaktionsmedium eine Stufe zur Alterung (Reifung) des Produkts für eine Zeitspanne von bis zu 45 Tagen, vorzugsweise für eine Zeitspanne von 30 Tagen, umfasst.

9. Verfahren nach Anspruch 1, bei dem die Entspannung des superkritischen CO₂ zur Abtrennung des Produkts von dem Reaktionsmedium auf einmal durchgeführt wird.

10. Verfahren nach Anspruch 1, bei dem die Entspannung des superkritischen CO₂ zur Abtrennung des Produkts von dem Reaktionsmedium allmählich und von 10⁵ Pa/min bis zu 10⁷ Pa/min durchgeführt wird.

11. Verfahren nach Anspruch 1, bei dem die Entspannung des superkritischen CO₂ zur Abtrennung des Produkts von dem Reaktionsmedium in Stufen von etwa 10⁶ bis etwa 5 x 10⁶ Pa durchgeführt wird.

12. Verfahren nach Anspruch 1, in dem das Produkt auf Oxidbasis ausgewählt wird aus einem Siliciumoxid, einem Produkt auf Basis eines Metalloxids, ausgewählt aus Titanoxid, Aluminiumoxid, Magnesiumoxid, Thoriumoxid, Yttriumoxid, Bariumoxid, Berylliumoxid, Zirkoniumoxid, Vanadiumoxid, Hafniumoxid, Scandiumoxid,Chromoxid, Nioboxid, Molybdänoxid, Lanthanoxid, Tantaloxid und Wolframoxid.

13. Verfahren nach Anspruch 1, bei dem die Bedingungen zum Inkontaktbringen der Beschickung aus Vorläuferverbindung(en) mit dem Reaktionsmedium aus superkritischem CO₂ und die Art der Entspannung in Abhängigkeit von den Struktureigenschaften und der Porosität des Produkts, das hergestellt werden soll, ausgewählt werden.

14. Verfahren zur Herstellung eines Produkts auf Basis von Titanoxid nach einem der vorhergehenden Ansprüche, bei dem die Vorläuferverbindung Titanisopropoxid ist.

15. Verfahren zur Herstellung eines Produkts auf Basis von Siliciumoxid nach einem der Ansprüche 1 bis 13, bei dem die Vorläuferverbindung Tetraethoxysilan ist.

16. Verfahren zur Herstellung eines Produkts auf Basis von Magnesiumoxid und Aluminiumoxid nach einem der Ansprüche 1 bis 13, bei dem die Vorläuferverbindung eine Mischung von Magnesiumethoxid und Aluminiumisopropoxid ist.

17. Produkt auf Basis eines Metalloxids, das nach dem Verfahren nach Anspruch 1 erhältlich ist, wobei dieses Produkt ein Titanoxid-Pulver ist, das nach dem Trocknen bei 100 °C eine spezifische Oberflächengröße von etwa 400 bis etwa 500 m²/g und ein Porenvolumen von 0,2 bis 0,3 cm³/g aufweist.

18. Produkt auf Basis eines Metalloxids, das nach dem Verfahren nach Anspruch 1 erhältlich ist, wobei das Produkt ein Gel aus feuchem Siliciumdioxid ist, das ein Porenvolumen von etwa 0,5 bis etwa 1,5 cm³/g aufweist.

19. Produkt auf Basis eines Metalloxids, das nach dem Verfahren nach Anspruch 1 erhältlich ist, wobei das Produkt ein Siliciumdioxid-Gel ist, das nach dem Trocknen bei 100 °C ein trockenes Siliciumdioxidgel mit einer spezifischen Oberflächengröße von etwa 480 bis etwa 764 m²/g bildet.

## Claims

1. Method of manufacturing a product based on a simple or mixed metal oxide, or an oxide of silicon, from a charge of precursor(s) comprising one or more organo-metallic precursors, said method comprising bringing the charge of precursor(s) into contact with a reaction medium comprising supercritical CO₂, at a temperature of 31 to 100°C and a supercritical pressure of 10⁷ to 5 x 10⁷ Pa in order to form, from said precursor, a product based on a simple or mixed metal oxide, or an oxide of silicon ; and the separation of said product based on a simple or mixed metal oxide, or an oxide of silicon, or organo-metallic products, from said reaction medium by reducing the pressure of the supercritical CO₂ to a pressure lower than the supercritical pressure.

2. Method according to Claim 1, in which the organo-metallic precursor is chosen from among an alkoxide or a modified alkoxide.

3. Method according to Claim 2, in which said alkoxide is chosen within the group comprising tetraethoxy silane, titanium (IV) iso-propoxide, aluminum iso-propoxide, magnesium ethoxide or a mixture of these alkoxides.

4. Method according to Claim 1 to 3, **characterized in that** the reaction medium comprises, in addition, a co-solvent.

5. Method according to Claim 4, **characterized in that** the co-solvent is water or ethanol.

6. Method according to any one of Claims 1 to 5, in which bringing said charge of precursor(s) into contact with the reaction medium is carried out during a period ranging up to 72 hours.

7. Method according to Claim 6, in which bringing said charge of precursor(s) into contact with the reaction medium is carried out during a period of 20 hours.

8. Method according to Claim 1, comprising, in addition, after the step of separating said product based on a metal oxide or a silicon oxide from the reaction medium, an aging treatment step of said product during a period ranging up to 45 days, preferably a period of 30 days.

9. Method according to Claim 1, in which the pressure reduction of the supercritical CO₂, for the separation of the product from the reaction medium, is carried out in a single step.

10. Method according to Claim 1, in which the pressure reduction of the supercritical CO₂, for the separation of the product from the reaction medium, is progressive and from 10⁵ Pa/min. to 10⁷ Pa/min.

11. Method according to Claim 1, in which the pressure reduction of the supercritical CO₂, for the separation of the product from the reaction medium, is carried out in stages of about 10⁶ to 5 x 10⁶ Pa.

12. Method according to Claim 1, in which the oxide based product is chosen from among an oxide of silicon and a product based on a metal oxide chosen from among an oxide of titanium, aluminum, magnesium, thorium, yttrium, barium, beryllium, zirconium, vanadium, hafnium, scandium, chromium, niobium, molybdenum, lanthanum, tantalum and tungsten.

13. Method according to Claim 1, in which the conditions for bringing the charge of precursor(s) into contact with the reaction medium of supercritical CO₂ and the mode of pressure reduction are chosen in relation to the characteristics of texture and porosity of the product that one wishes to obtain.

14. Method of manufacturing a product based on titanium oxide according to any one of the preceding Claims, in which the precursor is titanium iso-propoxide.

15. Method of manufacturing a product based on silicon oxide according to any one of Claims 1 to 13, in which the precursor is tetro-ethoxy silane.

16. Method of manufacturing a product based on magnesium oxide and aluminum oxide according to any one of Claims 1 to 13, in which the precursor is a mixture of magnesium ethoxide and aluminum iso-propoxide.

17. Product based on metal oxide which can be obtained by the method of claim 1, said product being titanium oxide powder which, when dried at 100°C, has a specific surface of approximately 400 to 500 m².g⁻¹ and a pore volume of 0.2 to 0.3 cm³.g⁻¹.

18. Product based on metal oxide which can be obtained by the method of claim 1, said product being a wet silica gel having a pore volume of approximately 0.5 to 1.5 cm³.g⁻¹.

19. Product based on metal oxide which can be obtained by the method of claim 1, said product being a silica gel which, after being dried at 100°C, forms a dry silica gel with a specific surface of approximately 480 to 764 m².g⁻¹.
